# EUROPEAN PATENT APPLICATION

(11) **EP 4 318 777 A1**
(43) Date of publication of application: **07.02.2024**
(21) Application number: 21933830.8
(22) Date of filing: 31.03.2021
(51) Int. Cl.: H01M 50/411

(54) **SEPARATOR, AND ELECTROCHEMICAL DEVICE AND ELECTRONIC DEVICE COMPRISING SAME**

(71) Applicant: Ningde Amperex Technology Limited, Ningde, Fujian 352100 (CN)
(72) Inventor: FENG, Bo, Ningde, Fujian 352100 (CN)
(74) Representative: Klunker IP Patentanwälte PartG mbB
(86) International application number: PCT/CN2021/084667
(87) International publication number: WO 2022/205165

(57) **Abstract**

This application provides a separator, an electrochemical apparatus including the same and an electronic device. The separator includes a substrate and a first coating layer provided on at least one surface of the substrate. The first coating layer includes a first polymer. The number of particles with a maximum length of 10µm to 30µm in the first polymer in any area of 250µm*200µm on a surface of the first coating layer is 10 to 30. The separator provided by this application has good interface adhesion performance and improves the structural stability of the lithium-ion battery, so that the lithium-ion battery has better charge and discharge performance, especially rate performance and cycle performance under low temperature.

## Description

### TECHNICAL FIELD

This application relates to the technical field of lithium-ion batteries, in particular to a separator, an electrochemical apparatus including the same, and an electronic device.

### BACKGROUND

Separator is one of the key inner components in the structure of lithium-ion batteries. The performance of the separator determines the interface structure, internal resistance and the like of batteries, and directly influences the capacity, cycle and safety performance and the like. Excellent separators play an important role in improving the overall performance of batteries. The separator mainly has the function of separating the positive electrode and the negative electrode of the battery, and preventing short-circuiting caused by contact between the two electrodes, and also has the function of allowing electrolyte ions to pass through. The existing separator of the lithium-ion battery is usually a coated separator, but the existing coated separator often cannot meet the needs of high adhesion and high dynamic performance at the same time. Therefore, it is necessary to provide a coated separator that can balance adhesion and dynamic performance.

Moreover, with the rapid development of lithium-ion batteries in consumer terminals and other fields, people have higher requirements for the charge, discharge and cycle performance of lithium-ion batteries. Especially under low temperature conditions, the actual charge and discharge performance of lithium-ion batteries is much lower than the design value, which restricts the further application of lithium-ion batteries.

### SUMMARY

The purpose of this application is to provide a separator, an electrochemical apparatus including the same, and an electronic device, to improve the rate performance and the cycle performance of lithium-ion batteries, especially the rate performance and the cycle performance under low temperature conditions. The specific technical solutions are as follows:

It should be noted that in the content of this application, this application will be explained by taking a lithium-ion battery as an example of the electrochemical apparatus, but the electrochemical apparatus of this application is not limited to the lithium-ion battery.

In a first aspect, this application provides a separator, including a substrate and a first coating layer provided on at least one surface of the substrate, the first coating layer including a first polymer, the number of particles with a maximum length of 10µm to 30µm in the first polymer in any area of 250µm*200µm on a surface of the first coating layer being 10 to 30, preferably 20 to 30.

When the separator in this application is observed by adopting an SEM (Scanning Electron Microscope) at a magnification of 500, the number of particles with a maximum length of 10µm to 30µm in the first polymer in any area of 250µm*200µm (i.e., an area that can be observed by an eye lens) is 10 to 30. Not limited to any theory, by controlling the number of particles with a maximum length of 10µm to 30µm in the first polymer to be within the above range, a point-like discrete distribution can be presented in the first coating layer, thus providing a channel for electrolyte liquid transport and further improving the performance of the lithium-ion battery, especially at low temperatures.

The first coating layer in this application is provided on at least one surface of the substrate of the separator. For example, the first coating layer may be provided on one surface of the substrate of the separator, or the first coating layer may be provided on two surfaces of the substrate of the separator. The positive electrode in this application may specifically refer to a positive electrode plate, and the negative electrode may specifically refer to a negative electrode plate.

In an implementation of this application, the air permeability value P of the separator is 500sec/100mL to 10000sec/100mL, preferably 1000sec/100mL to 5000sec/100mL. In a case that the air permeability value P of the separator is too high (for example, higher than 10000sec/100mL), it leads to an increase in the internal resistance of the lithium-ion battery, which will influence the rate and discharge performance of the battery, especially at low temperature; in a case that the air permeability value P of the separator is too low (for example, lower than 500sec/100mL), although the air permeability of the separator is good, the hardness of the corresponding cell (lithium-ion battery) is low, which is prone to the occurrence of a soft cell. By controlling the breathability P of the separator to be within the above range, the lithium-ion battery can have excellent rate performance, especially at low temperature, and the hardness of the cell can be improved significantly.

In an implementation of this application, the coating surface density W1 of the first coating layer of the separator is 0.4g/m² to 2g/m². Preferably, the coating surface density W1 of the first coating layer is 0.4g/m² to 1g/m². Not limited to any theory, in a case that the coating surface density W1 of the first coating layer is too low (for example, lower than 0.4g/m²), it will lead to insufficient interface adhesion and a decrease in coating adhesion performance; in a case that the coating surface density W1 of the first coating layer is too high (for example, higher than 2g/m²), the relative content of the electrode active material in the lithium-ion battery decreases, thus influencing the energy density of the lithium-ion battery. By controlling the coating surface density W1 of the first coating layer in this application to be within the above range, excellent interface adhesion performance can be achieved between the separator and the electrode plate, and the influence on the energy density of the lithium-ion battery is small.

In an implementation of this application, the porosity K of the separator is 30% to 65%. Not limited to any theory, in a case that the porosity K of the separator is too low (for example, lower than 30%), it is difficult for the electrolyte liquid to infiltrate the separator, thus influencing the ion transport ability of the separator; in a case that the porosity K of the separator is too high (for example, higher than 65%), the separator becomes loose and the strength decreases, thus influencing the puncture resistance of the separator. By controlling the porosity K of the separator in this application to be within the above range, the separator can have excellent ion transport capacity and strength.

In an implementation of this application, the separator further includes a heat-resistant layer, the heat-resistant layer may be provided between the substrate and the first coating layer, the heat-resistant layer includes inorganic particles, and the particle size Dv50 of the inorganic particles is 0.5µm to 35µm, preferably 5µm to 35µm. By providing a heat-resistant layer between the substrate and the first coating layer, the strength and heat resistance of the separator can be further improved. The particle size of the inorganic particles should not be too large or too small. In a case that the particle size of the inorganic particles is too large (for example, larger than 35µm), it is difficult to achieve thin coating design of the heat-resistant layer, thus influencing the energy density of the lithium-ion battery. In a case that the particle size of the inorganic particles is too small (for example, smaller than 0.5µm), it will lead to the piling of the inorganic particles and a decrease in the pore size, thus influencing ion transport and influencing the dynamic performance of the lithium-ion battery. By controlling the Dv50 of the inorganic particles within the above range, the separator can have a high energy density and excellent dynamic performance. The thickness of the heat-resistant layer is not specially limited in this application. For example, it may be 0.6µm to 40µm, as long as the heat-resistant layer meets the requirements of this application.

The inorganic particles in the heat-resistant layer are not specially limited in this application, as long as the purpose of this application can be achieved. The inorganic particles include at least one of boehmite, magnesium hydroxide, aluminum oxide, titanium dioxide, silicon dioxide, zirconium dioxide, tin dioxide, magnesium oxide, zinc oxide, barium sulfate, boron nitride and aluminum nitride.

In an implementation of this application, the air permeability value P of the separator and the surface density W1 of the first coating layer satisfy the following relationship: P/W1=500 to 6500. Not limited to any theory, in a case that the ratio of the air permeability value P of the separator to the density W1 of the first coating layer is too low (for example, P/W1 is lower than 500), it indicates that the air permeability value of the separator is low and the surface density of the first coating layer is small, which will lead to poor interface adhesion between the separator and the electrode plate, thus influencing the hardness of the lithium-ion battery and easily resulting in a soft cell. In a case that the ratio of the air permeability value P of the separator to the surface density W1 of the first coating layer is too high (for example, P/W1 is higher than 6500), it indicates that the air permeability value of the separator is high, the air permeability is poor and the coating surface density of the first coating layer is high, thus leading to an increase in the internal resistance of the lithium-ion battery and influencing the rate performance of the battery, especially at low temperature. By controlling the ratio of the air permeability value P of the separator to the surface density W1 of the first coating layer within the above range, the lithium-ion battery can have excellent rate performance, especially at low temperature.

In an implementation of this application, the porosity K of the separator and the surface density W1 of the first coating layer satisfy the following relationship: K/W1=0.15 to 1.4. Not limited to any theory, in a case that the ratio of the porosity K of the separator to the density W1 of the first coating layer is too low (for example, KIWI is lower than 0.15), it indicates that the porosity of the separator is low, the coating surface density of the first coating layer is high and it is difficult for the electrolyte liquid to infiltrate the separator, thus influencing the ion transport energy of the separator. In a case that the ratio of the porosity K of the separator to the coating surface density W1 of the first coating layer is too high (for example, K/W1 is higher than 1.4), it indicates that the porosity of the separator is high, the coating surface density of the first coating layer is small, the separator becomes loose and the strength decreases, thus influencing the puncture resistance of the separator. By controlling the ratio of the porosity K of the separator to the surface density W1 of the first coating layer within the above range, the separator can have excellent ion transport ability and strength.

In an implementation of this application, the first coating layer further includes a first auxiliary adhesive, and the mass ratio of the first polymer to the first auxiliary adhesive is 2.5 to 18. Not limited to any theory, in a case that the mass ratio of the first polymer to the first auxiliary adhesive is too low (for example, lower than 2.5), the content of the first polymer decreases, resulting in a decrease in the gap caused by the granular first polymer, influencing the transport of electrolyte liquid between the interfaces of the first coating layer, and also influencing the adhesion between the first coating layer and the electrode plate. In a case that the mass ratio of the first polymer to the first auxiliary adhesive is too high (for example, higher than 18), the cohesion of the first coating layer is low, and the adhesion performance of the first polymer will decrease with the decrease of the cohesion of the first coating layer. By controlling the mass ratio of the first polymer to the first auxiliary adhesive within the above range, excellent adhesion between the first coating layer and the electrode plate can be achieved.

The first auxiliary adhesive is not specially limited in this application, as long as it can be meet the requirements of this application. For example, it may include at least one of ethyl acrylate, butyl acrylate, ethyl methacrylate, styrene, chlorostyrene, fluorostyrene, methyl styrene, acrylic acid, methyl acrylic acid, maleic acid, acrylonitrile and butadiene.

In an implementation of this application, the separator further a second coating layer, the first coating layer and the second coating layer may be respectively provided on two sides of the separator, the second coating layer includes a second polymer and a second auxiliary adhesive, and the mass ratio of the second polymer to the second auxiliary adhesive is 5 to 20. Not limited to any theory, in a case that the mass ratio of the second polymer to the second auxiliary adhesive is too low (for example, lower than 5), the content of the second polymer decreases, thus influencing the adhesion between the second coating layer and the electrode plate. In a case that the mass ratio of the second polymer to the second auxiliary adhesive is too high (for example, higher than 20), the cohesion of the second coating layer is low, and the adhesion performance of the second coating layer decreases. By controlling the mass ratio of the second polymer to the second auxiliary adhesive within the above range, excellent adhesion between the second coating layer and the electrode plate can be achieved.

In this application, one surface of the first coating layer of the separator may be in contact with the positive electrode plate, and one surface of the second coating layer of the separator may be in contact with the negative electrode plate, so that an excellent adhesion effect between the separator and the positive electrode plate and negative electrode plate is achieved, and better electrolyte liquid wettability between the separator and the positive electrode plate is achieved, thus improving the low-temperature performance of the lithium-ion battery. The separator in this application has lithium-ion air permeability and electronic barrier properties.

In an implementation of this application, the adhesion strength of the first coating layer in case of a positive electrode is set to 4N/m to 20N/m, thus showing excellent adhesion performance between the first coating layer and the positive electrode plate.

In an implementation of this application, the adhesion strength of the second coating layer in case of a negative electrode is set to 4N/m to 20N/m, thus showing excellent adhesion performance between the second coating layer and the negative electrode plate.

In an implementation of this application, based on the total mass of the first coating layer, the mass percentage content of the first polymer is 85% to 95%, and the mass percentage content of the first auxiliary adhesive is 5% to 15%. By controlling the content of the first polymer and the first auxiliary adhesive within the above range, a first polymer with excellent adhesion performance can be obtained, so that the adhesion between the first coating layer and the positive electrode is high, thus improving the performance of the lithium-ion battery at low temperature.

In an implementation of this application, the softening point of the first polymer is 90°C to 150°C, preferably 110°C to 150°C. Not limited to any theory, in a case that the softening point of the first polymer is too high (for example, higher than 150°C), the first polymer does not easily soften during heating and the formed adhesion area is small, thus influencing the adhesion between the first coating layer and the electrode plate. In a case that the softening point of the first polymer is too low (for example, lower than 90°C), the first polymer easily softens and blocks the pores of the coating/separator, thus influencing the dynamic performance of the lithium-ion battery. By controlling the softening point of the first polymer in this application within the above range, the first polymer can have excellent adhesion performance, thus improving the adhesion between the first coating layer and the electrode plate. The term 'softening point' refers to the temperature at which a substance softens. The Dv50 of the first polymer is 3µm to 16µm. Not limited to any theory, in a case that the Dv50 of the first polymer is too small (for example, smaller than 3µm), the interface spacing between the separator and the electrode plate is too small, thus reducing the ability to transport electrolyte solution. In a case that the Dv50 of the first polymer is too large (for example, larger than 16µm), the gap caused by the granular first polymer is too large, thus also influencing the adhesion performance between the separator and the electrode plate. By controlling the Dv50 of the first polymer in this application within the above range, a first polymer with excellent adhesion performance can be obtained.

In an implementation of this application, the coating surface density W2 of the second coating layer of the separator is 0.1g/m² to 1g/m². Not limited to any theory, in a case that the coating surface density W2 of the second coating layer is too low (for example, lower than 0.1g/m²), it will lead to insufficient interface adhesion and a decrease in coating adhesion performance. In a case that the coating surface density W2 of the second coating layer is too high (for example, higher than 1g/m²), it is easy to block the lithium-ion transport channel, thus influencing the rate performance of the lithium-ion battery. By controlling the coating surface density W2 of the second coating layer in this application to be within the above range, excellent interface adhesion performance between the separator and the electrode plate can be achieved, and the influence on the rate performance of the lithium-ion battery is small.

In an implementation of this application, based on the total mass of the second coating layer, the mass percentage content of the second polymer is 88% to 92.5%, and the mass percentage content of the second auxiliary adhesive is 7.5% to 12%. By controlling the content of the second polymer and the second auxiliary adhesion within the above range, a second coating with excellent adhesion performance can be obtained, so that the adhesion between the second coating layer and the negative electrode is high, thus improving the performance of the lithium-ion battery at low temperature.

In an implementation of this application, the first polymer includes at least one of homopolymers or copolymers of vinylidene fluoride, hexafluoropropylene, ethylene, propylene, vinyl chloride, chloropropene, acrylic acid, acrylate, styrene, butadiene and acrylonitrile.

The second polymer is not specially limited in this application, as long as it can meet the requirements of this application. For example, the second polymer includes at least one of ethyl acrylate, butyl acrylate, ethyl methacrylate, styrene, chlorostyrene, fluorostyrene, methyl styrene, acrylic acid, methyl acrylic acid, maleic acid, acrylonitrile and butadiene. In an implementation of this application, the Dv50 of the second polymer is 0.2µm to 8µm. By controlling the Dv50 of the second polymer within the above range, a second polymer with excellent adhesion performance can be obtained. The second auxiliary adhesive is not specially limited in this application, as long as it can meet the requirements of this application. For example, the second auxiliary adhesive may include at least one of carboxymethyl cellulose sodium or dimethylsiloxane.

The method for preparing the first polymer is not especially limited in this application. A preparation method commonly used by those skilled in the art may be adopted. For example, the following preparation method may be adopted.

Vacuum pumping is performed on a reactor. Nitrogen is pumped to replace oxygen. Then, deionized water, vinylidene fluoride (VDF), emulsifier perfluoroalkyl carboxylate and chain transfer agent isopropanol are added to the reactor with a mixer until the pressure is about 3.5MPa. Then, the temperature is increased to 50°C to 70°C. The rotating speed of the mixer is controlled to be 70r/min to 100r/min. Polymerization reaction is started. At the same time, vinylidene fluoride monomers are continuously added to maintain the pressure of the reactor to be 3.5MPa. Till the solid content of emulsion in the reactor reaches 25% to 30%, the reaction is stopped, the unreacted monomers are recovered, the polymer emulsion is discharged, and centrifugation, washing and drying are performed to obtain the first polymer.

The initiator is not specially limited in this application, as long as it can initiate monomer polymerization. For example, it may be diisopropylbenzene hydroperoxide. The amounts of the added monomers, deionized water, initiator and chain transfer agent are not specially limited in this application, as long as it can ensure that the added monomers are polymerized. For example, the mass of the deionized water is 5 to 10 times the mass of the monomers, the initiator accounts for 0.05% to 0.5% of the mass of the monomers, the emulsifier accounts for 0.1% to 1% of the mass of the monomers, and the chain transfer agent accounts for 3% to 7% of the mass of the monomers.

The methods for preparing the first auxiliary adhesive, the second polymer and the second auxiliary adhesive are not specially limited in this application. Preparation methods commonly used by those skilled in the art may be adopted. The methods may be selected according to the type of the monomers used. For example, solution method, slurry method, vapor method and the like may be adopted.

The positive electrode plate is not specially limited in this application, as long as it can achieve the purpose of this application. For example, the positive electrode plate typically includes a positive electrode current collector and a positive electrode active material layer. The positive electrode current collector is not specially limited, which may be any positive electrode current collector in the art. For example, it may be an aluminum foil, an aluminum alloy foil, or a composite current collector. The positive electrode active material layer includes a positive electrode active material. The positive electrode active material is not specially limited, which may be any positive electrode active material in the art. For example, it may include at least one of lithium nickel-cobalt manganate (811, 622, 523, 111), lithium nickel-cobalt aluminate, lithium iron phosphate, lithium-rich manganese-based material, lithium cobaltate, lithium manganate, lithium manganese iron phosphate and lithium titanate.

The negative electrode plate is not specially limited in this application, as long as it can achieve the purpose of this application. For example, the negative electrode plate typically includes a negative electrode current collector and a negative electrode active material layer. The negative electrode current collector is not specially limited, which may be any negative electrode current collector in the art. For example, it may be a copper foil, an aluminum foil, an aluminum alloy foil or a composite current collector. The negative electrode active material layer includes a negative electrode active material. The negative electrode active material is not specially limited, which may be any negative electrode active material in the art. For example, it may include at least one of artificial graphite, natural graphite, mesophase carbon microspheres, soft carbon, hard carbon, silicon, silicon carbon, lithium and the like.

The substrate of the separator in this application includes, but is not limited to, at least one selected from the group consisting of polyethylene, polypropylene, polyethylene terephthalate, polyimide and aramid. For example, polyethylene includes at least one component selected from the group consisting of high-density polyethylene, low-density polyethylene and ultra-high molecular weight polyethylene. Especially polyethylene and polypropylene, they have excellent effects on preventing short-circuiting and can improve the stability of the lithium-ion battery through the turn-off effect.

The lithium-ion battery in this application further includes electrolyte, which may be one or more of gel electrolyte, solid electrolyte and electrolyte liquid. The electrolyte includes a lithium salt and a non-aqueous solvent. In some implementations of this application, the lithium salt is one or more selected from the group consisting of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB and lithium difluoroborate. For example, the lithium salt may be LiPF₆ because it can provide high ion conductivity and improve cycle characteristics. The nonaqueous solvent may be a carbonate compound, a carboxylate compound, an ether compound, other organic solvents or a combination thereof. The carbonate compound may be a chain-like carbonate compound, a cyclic carbonate compound, a fluorocarbonate compound, or a combination thereof. Examples of the chain-like carbonate compound are dimethyl carbonate (DMC), diethyl carbonate (DEC), dipropyl carbonate (DPC), methyl propyl carbonate (MPC), ethylene propyl carbonate (EPC), methyl ethyl carbonate (MEC) and combinations thereof. Examples of the cyclic carbonate compound include ethyl carbonate (EC), propylene carbonate (PC), butyl carbonate (BC), vinyl ethyl carbonate (VEC), and combinations thereof. Examples of the fluorocarbonate compound include fluoroethyl carbonate (FEC), 1,2-difluoroethyl carbonate, 1,1-difluoroethyl carbonate, 1,1,2-trifluoroethylene carbonate, 1,1,2-tetrafluoroethyl carbonate, 1-fluoro-2-methylethyl carbonate, 1-fluoro-1-methylethyl carbonate, 1,2-difluoro-1-methylethyl carbonate, 1,1,2-trifluoro-2-methylethyl carbonate, trifluoromethyl ethyl carbonate and combinations thereof. Examples of the carboxylate compound are methyl formate, methyl acetate, ethyl acetate, propyl acetate, tert-butyl acetate, methyl propionate, ethyl propionate, propyl propanoate, γ- butyrolactone, decalactone, pentolactone, mevalonolactone, caprolactone, and combinations thereof. Examples of the ether compound are dibutyl ether, tetraethylene glycol dimethyl ether, diethylene glycol dimethyl ether, 1,2-dimethoxy ethane, 1,2-diethoxy ethane, ethoxy methoxy ethane, 2-methyltetrahydrofuran, tetrahydrofuran, and combinations thereof. Examples of the other organic solvents are dimethyl sulfoxide, 1,2-dioxolane, sulfolane, methyl sulfolane, 1,3-dimethyl-2-imidazolidone, N-methyl-2-pyrrolidone, formamide, N-methylformamide, acetonitrile, trimethyl phosphate, triethyl phosphate, trioctyl phosphate, phosphate, and combinations thereof.

In a second aspect, this application provides an electrochemical apparatus, including the separator in any one of the implementations above, which has excellent low-temperature rate performance and low-temperature cycle performance. In a third aspect, this application provides an electronic device, including the electrochemical apparatus in the above implementation of this application, which has excellent low-temperature rate performance and low-temperature cycle performance.

The electronic device in this application is not specifically limited, which may be any electronic device known in the existing technology. In some examples, the electronic device may include, but not limited to, laptop computers, stylus input computers, mobile computers, e-book players, portable phones, portable fax machines, portable copiers, portable printers, head-mounted stereo earphones, video recorders, LCD TVs, portable cleaners, portable CD layers, mini CD layers, transceivers, electronic notepads, calculators, memory cards, portable audio recorders, radio sets, backup power supplies, motors, cars, motorcycles, power bicycles, bicycles, lighting fixtures, toys, game consoles, clocks, electric tools, flash lights, cameras, large household batteries, and lithium-ion capacitors.

The preparation process of the electrochemical apparatus is well-known to those skilled in the art, which is not specially limited in this application. For example, the lithium-ion battery can be manufactured by overlapping a positive electrode and a negative electrode through a separator, placing them into a housing after winding, folding and other operations as needed, injecting electrolyte liquid into the housing, and performing sealing. The separator used is the separator provided in this application. In addition, overcurrent prevention components, guide plates and the like may also be placed in the housing as needed to prevent pressure rise, overcharging and over-discharging in the lithium-ion battery.

In this application, the term "air permeability value" refers to the time required for 100ml of air to pass through the separator. The larger the air permeability value, the poorer the air permeability of the separator. The smaller the air permeability value, the better the air permeability of the separator. The term "Dv50" refers to a particle size where the cumulative distribution of particles is 50%, that is, the volume content of particles with a particle size smaller than this size is 50% of all particles.

This application provides a separator, an electrochemical apparatus including the same and an electronic device. The separator includes a substrate and a first coating layer provided on at least one surface of the substrate. The first coating layer includes a first polymer. The number of particles with a maximum length of 10µm to 30µm in the first polymer in any area of 250µm*200µm on a surface of the first coating layer is 10 to 30. The separator provided by this application has good interface adhesion performance and improves the structural stability of the lithium-ion battery, so that the lithium-ion battery has better charge and discharge performance, especially rate performance and cycle performance under low temperature.

### BRIEF DESCRIPTION OF DRAWINGS

In order to describe the technical solutions of this application and the existing technology more clearly, the drawings required in the examples and the existing technology will be briefly introduced below. Obviously, the drawings in the following description are only some examples of this application.
FIG. 1 illustrates a structural schematic diagram of a separator according to a first implementation of this application.
FIG. 2 illustrates a structural schematic diagram of a separator according to a second implementation of this application.
FIG. 3 illustrates a structural schematic diagram of a separator according to a third implementation of this application.
FIG. 4 illustrates a structural schematic diagram of a separator according to a fourth implementation of this application.

In the drawings, 1-substrate, 2-first coating layer, 3-second coating layer, 4-heat-resistant layer.

### DETAILED DESCRIPTION

In order to make the purposes, technical solutions, and advantages of this application clearer, this application will be further described below in detail with reference to the drawings and examples. Obviously, the described examples are only a part of the examples of this application, not all of them. Based on the examples in this application, all other technical solutions obtained by those skilled in the art still fall within the scope of protection of this application.

It should be noted that in the specific implementation of this application, this application is described by taking an electrochemical apparatus being a lithium-ion battery as an example, but the electrochemical apparatus in this application is not limited to a lithium-ion battery.

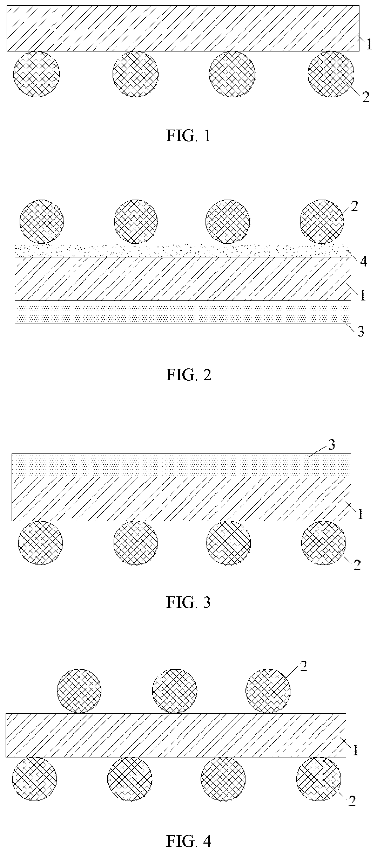

In an implementation of this application, referring to FIG. 1, a separator in this application includes a substrate 1 and a first coating layer 2 provided on one surface of the substrate 1.

In an implementation of this application, referring to FIG. 2, one surface of the substrate 1 is provided with a first coating layer 2, and the other surface is provided with a second coating layer 3. A heat-resistant layer 4 is provided between the first coating layer 2 and the substrate 1.

In an implementation of this application, referring to FIG. 3, the separator includes a substrate 1, and a first coating layer 2 and a second coating layer 3 respectively provided on two surfaces of the substrate 1.

In an implementation of this application, referring to FIG. 4, the separator includes a substrate 1, and first coating layers 2 respectively provided on two surfaces of the substrate 1.

### Examples

Below, examples and comparative examples are provided to describe the implementations of this application more specifically. Various tests and evaluations are conducted according to the following methods. In addition, as long as there is no special description, "parts" and "%" are by mass.

### Test methods and apparatuses:

### Test of number of particles of first polymer in area of 250µm*200µm on surface of first coating layer

A separator with a first coating layer was cut into 10mm* 10mm samples. Then, the samples were placed under an SEM for observation at a magnification of 500. Any five areas of 250µm*200µm (i.e., an area that can be observed under an eye lens) were selected from the field of view. The number of particles with a maximum length of 10µm to 30µm in the first polymer in the selected areas was recorded. Then, averaging was performed to obtain the number of particles with a maximum length of 10µm to 30µm in the first polymer in unit area on the first coating layer.

### Test of air permeability value of separator

A discharged lithium-ion battery to be tested was disassembled. Then, the separator was taken out and immersed in N-methyl-2-pyrrolidone (NMP) for 30min. Then, drying was performed in a fume hood at 25°C for 4h. The dried separator was taken out. Test samples with a size of 4cm*4cm were fabricated under an environment with temperature of 25°C and humidity of less than 80%. An air permeability tester was used to measure the air permeability value directly through the Gurley test (100mL) method, in unit of seconds, which represented the time required for 100mL of air to pass through a separator with an area of 4cm*4cm.

### Test of porosity of separator

Separator samples were dried in an 85°C vacuum drying oven for 2h, then taken out, cooled and then tested. The separator was wrapped flat by using A4 paper, then laid flat on a die. and punched by using a punching machine toto obtain samples for testing. Firstly, a micrometer was used to measure the thickness of the samples, and he apparent volume V1 of the samples were calculated based on the surface area and thickness of the samples. Then, a true density instrument (model AccuPyc II) was used to test the true volume V2 of the samples, thus obtaining porosity=(V1-V2)/V1 * 100%.

### Test of Dv50 of inorganic particle, first polymer and second polymer

A laser particle size analyzer was used to respectively test the Dv50 of the inorganic particles, first polymer and second polymer.

### Test of adhesion between separator and electrode plate

National standard GB/T 2790-1995 was adopted, that is, the 180° peel test standard was adopted to test the adhesion between the separator and the positive electrode plate or negative electrode plate. The separator and the positive electrode plate or negative electrode plate were cut into samples with a size of 54.2mm*72.5mm. The separator was laminated with the positive electrode plate or negative electrode plate. A hot press was used for hot pressing for 85s at temperature of 85°C and pressure of 1Mpa. The laminated samples were cut into strips with a size of 15mm*54.2mm. The adhesion between the separator and the positive electrode plate or negative electrode plate was tested according to the 180° peel test standard.

### Test of softening point of first polymer

A universal Differential Scanning Calorimeter (DSC) method was adopted. Smg of a first polymer sample prepared in each example and comparative example were taken. The temperature was increased to 150°C at a heating rate of 5°C/min. A DSC curve was collected. The softening point, also known as the softening temperature, of the first polymer was determined from the obtained DSC curve.

### Test of hardness of lithium-ion battery

A three-point bending method was adopted to test the hardness of the cell. Operation was performed at 25°C. The cell was fully discharged to 3.0V. Insulation protection was provided for electrode tabs. The spacing between lower support rods of a hardness testing fixture of a universal tester (Instron-3365) was adjusted to 2/3 of the width of the cell. The cell was placed flat on a lower fixture, with the width direction perpendicular to the support rods. An upper pressure head of the fixture was adjusted to be perpendicular to the width direction and be located in a center of the cell. Downward pressing was performed at a speed of Smm/min. The deformation displacement of the cell was recorded when the upper pressure head was in contact with the cell. When the displacement reached 1mm, the corresponding anti-deformation force was the hardness of the cell. The lower support rods were arc-shaped, with a diameter of 10mm. The upper pressure head was arc-shaped, with a diameter of 10mm.

### Test of discharge rate of lithium-ion battery

2C discharge rate test: at 25°C, a formed lithium-ion battery was charged to 4.45V at constant current of 0.2C, and then charged at constant voltage until the current was less than or equal to 0.05C. Then, standing was performed for 30min. Then, the lithium-ion battery was discharged to 3.0V at constant current of 0.2C. Testing was performed to obtain the 0.2C discharge capacity of the lithium-ion battery.

At 25°C, the lithium-ion battery was charged to 4.45V at constant current of 0.2C, and then charged at constant voltage until the current was less than or equal to 0.05C. Then, standing was performed for 30min. Then, the lithium-ion battery was discharged to 3.0V at constant current of 2C. Testing was performed to obtain the 2C discharge capacity of the lithium-ion battery.

2C discharge capacity retention rate of lithium-ion secondary battery (%) = 2C discharge capacity/0.2C discharge capacity* 100%

-20°C 0.2C discharge rate test: at 25°C, a formed lithium-ion battery was charged to 4.45V at constant current of 0.2C, and then charged at constant voltage until the current was less than or equal to 0.05C. Then, standing was performed for 30min. Then, the lithium-ion battery was discharged to 3.0V at constant current of 0.2C. Testing was performed to obtain the 25°C 0.2C discharge capacity of the lithium-ion battery.

At 25°C, the lithium-ion battery was charged to 4.45V at constant current of 0.2C, and then charged at constant voltage until the current was less than or equal to 0.05C. Then, the cell was placed in an environment of -20°C and standing was performed for 60min. Then, the lithium-ion battery was discharged to 3.0V at constant current of 0.2C. Testing was performed to obtain the -20°C 0.2C discharge capacity of the lithium-ion battery.

-20°C 0.2C discharge capacity retention rate of lithium-ion secondary battery (%) = -20°C 0.2C discharge capacity/25°C 0.2C discharge capacity* 100%

### Test of cycle performance of lithium-ion battery

In an environment of 12°C, first charging and discharging were performed. Constant-current and constant-voltage charging was performed at 2C charge current until the upper limit voltage was 4.45V Then, constant-current discharging was performed at 1C discharge current until the final voltage was 3.0V The discharge capacity at the first cycle was recorded. Then, the above steps were repeated for 500 charge and discharge cycles. The discharge capacity at the 500th cycle was recorded. Cycle capacity retention rate = (discharge capacity at 500th cycle/discharge capacity at first cycle) * 100%.

### Example 1

### <1-1 Preparation of first polymer>

Vacuum pumping was performed on a reactor. Nitrogen was pumped to replace oxygen. Deionized water, vinylidene fluoride (VDF), initiator diisopropylbenzene hydroperoxide, emulsifier perfluoroalkyl carboxylate and chain transfer agent isopropanol were added into the reactor with a mixer until the pressure of the reactor was 3.5MPa. The mass of the deionized water was 7 times the mass of vinylidene fluoride monomers. The mass of the initiator was 0.2% of the mass of vinylidene fluoride monomers. The mass of the emulsifier was 0.5% of the mass of vinylidene fluoride monomers. The mass of the chain transfer agent was 5% of the mass of vinylidene fluoride monomers. Then, the temperature was increased to 60°C. The rotating speed of the mixer was controlled to be at 80r/min. Polymerization reaction was started. At the same time, vinylidene fluoride monomers were continuously added to maintain the pressure of the reactor to be 3.5MPa. Till the solid content of emulsion in the reactor reached 25%, the reaction was stopped, the unreacted monomers were recovered, the polymer emulsion was discharged, and centrifugation, washing and drying were performed to obtain a first polymer. The softening point of the first polymer was 125°C, and the Dv50 was 12µm.

### <1-2 Preparation of separator>

### <1-2-1 Preparation of first coating layer>

The prepared first polymer and a first auxiliary adhesive (a copolymer formed through polymerization of 80% of styrene, 10% of isobutyl acrylate, and 10% of acrylonitrile, with the Dv50 of 0.2pm) were added into the mixer according to a mass ratio of 90: 10. Uniform mixing was performed. Then, deionized water was added for mixing. The viscosity of the slurry was adjusted to 100mPa·s and the solid content was adjusted to 12% to obtain slurry A. The slurry A was uniformly coated onto one surface of a PE separator substrate with a thickness of 5µm. The coating surface density of the first coating layer was 1g/m². Drying was performed in an oven to form a separator with the structure illustrated in FIG. 1.

The obtained separator was observed by using an SEM at a magnification of 500. The number of particles with a maximum length of 10µm to 30µm in the first polymer in any area of 250µm*200µm (unit area) on a surface of the first coating layer was 10 (number of particles for short in Table 1).

### <1-3 Preparation of positive electrode plate>

Positive electrode active materials lithium cobaltate, acetylene black and polyvinylidene fluoride (PVDF) were mixed according to a mass ratio of 94:3:3. Then, N-methyl-2-pyrrolidone (NMP) was added as a solvent to prepare slurry with a solid content of 75%. Uniform mixing was performed. The slurry was uniformly coated onto one surface of an aluminum foil with a thickness of 12µm. Drying was performed at 90°C. Cold pressing was performed to obtain a positive electrode plate with a positive electrode active material layer with a thickness of 100µm. Then, the above steps were repeated on the other surface of the positive electrode plate to obtain a positive electrode plate coated with positive electrode active material layers on two surfaces. The positive electrode plate was cut into pieces with a size of 74mm*867mm, which were welded with electrode tabs for future use.

### <1-4 Preparation of negative electrode plate>

Negative electrode active materials artificial graphite, acetylene black, styrene-butadiene rubber and carboxymethyl cellulose sodium were mixed according to a mass ratio of 96:1:1.5:1.5. Then, deionized water was added as a solvent to prepare slurry with a solid content of 70%. Uniform mixing was performed. The slurry was uniformly coated onto one surface of a copper foil with a thickness of 8µm. Drying was performed at 110°C. Cold pressing was performed to obtain a negative electrode plate coated with a negative electrode active material layer with a thickness of 150µm on one surface. Then, the above steps were repeated on the other surface of the negative electrode plate to obtain a negative electrode plate coated with negative electrode active material layers on two surfaces. The negative electrode plate was cut into pieces with a size of 74mm*867mm, which were welded with electrode tabs for future use.

### <1-5 Preparation of electrolyte liquid>

In an environment with a water content of less than 10ppm, non-aqueous organic solvents ethylene carbonate (EC), diethyl carbonate (DEC), propylene carbonate (PC), propyl propanoate (PP) and vinyl carbonate (VC) were mixed according to a mass ratio of 20:30:20:28:2. Then, lithium hexafluorophosphate (LiPF₆) was added to the non-aqueous organic solvents, was dissolved and was uniformly mixed to obtain electrolyte liquid. The mass ratio of LiPF₆ to the non-aqueous organic solvents was 8:92.

### <1-6 Preparation of lithium-ion battery>

The positive electrode plate, the separator and the negative electrode plate prepared above were stacked sequentially. The surface of the separator coated with the first coating layer was enabled to be in contact with the positive electrode plate. Winding was performed to obtain an electrode assembly. The electrode assembly was contained in an aluminum-plastic film packaging bag. Moisture was removed at 80°C. The prepared electrolyte liquid was injected. Vacuum encapsulation, standing, formation, shaping and other processes were performed to obtain a lithium-ion battery.

### Example 2

Except the step of adjusting up the solid content of slurry A in <preparation of separator> to enable the number of particles with a maximum length of 10µm to 30µm in the first polymer in any area of 250µm*200µm on a surface of the first coating layer to be 15 as shown in Table 1, other steps were the same as those in Example 1.

### Example 3

Except the step of adjusting up the solid content of slurry A in <preparation of separator> to enable the number of particles with a maximum length of 10µm to 30µm in the first polymer in any area of 250µm*200µm on a surface of the first coating layer to be 20 as shown in Table 1, other steps were the same as those in Example 1.

### Example 4

Except the step of adjusting up the solid content of slurry A in <preparation of separator> to enable the number of particles with a maximum length of 10µm to 30µm in the first polymer in any area of 250µm*200µm on a surface of the first coating layer to be 26 as shown in Table 1, other steps were the same as those in Example 1.

### Example 5

Except the step of adjusting up the solid content of slurry A in <preparation of separator> to enable the number of particles with a maximum length of 10µm to 30µm in the first polymer in any area of 250µm*200µm on a surface of the first coating layer to be 30 as shown in Table 1, other steps were the same as those in Example 1.

### Example 6

Except the step of adding a heat-resistant layer and a second coating layer in <preparation of separator>, the step of adjusting the coating surface density of the first coating layer to be 0.4g/m² as illustrated in Table 2-2 and the step of <preparation of lithium-ion battery>, other steps were the same as those in Example 1.

### <1-6 Preparation of separator>

### <1-6-1 Preparation of heat-resistant layer>

Inorganic particles boehmite with Dv50 of 2µm and polyacrylate were mixed according to a mass ratio of 90:10. The mixture was uniformly dispersed into deionized water to form heat-resistant layer slurry with a solid content of 50%. Then, the obtained heat-resistant layer slurry was uniformly coated onto one surface of the separator substrate by adopting a micro gravure coating method to obtain a heat-resistant layer with a corresponding thickness. Drying was performed in an oven. Then, a first coating layer was prepared on the surface of the heat-resistant layer according to <preparation of first coating layer> in Example 1.

### <1-6-2 Preparation of second coating layer>

A second polymer (a copolymer formed through polymerization of 80% of styrene, 10% of isobutyl acrylate and 10% of acrylonitrile, with the Dv50 of 0.2µm) and a second auxiliary adhesive (a mixture formed by 5.5% of carboxymethyl cellulose sodium and 94.5% of dimethylsiloxane) were added into a mixer according to a mass ratio of 91:9. Uniform mixing was performed. Then, deionized water was added for mixing. The viscosity of the slurry was adjusted to 100mPa·s and the solid content was adjusted to 12% to obtain slurry B. The slurry B was uniformly coated onto the other surface of the separator substrate (i.e., the surface of the separator without the first coating layer). The coating surface density of the second coating layer was 0.2g/m². Drying was performed in an oven to form a separator with the structure illustrated in FIG. 2.

The obtained separator was observed by using an SEM at a magnification of 500. The number of particles with a maximum length of 10µm to 30µm in the first polymer in any area of 250µm*200µm (unit area) on a surface of the first coating layer was 25 (number of particles for short in Table 1 and Table 2-2).

### <Preparation of lithium-ion battery>

The positive electrode plate, the separator and the negative electrode plate prepared above were stacked sequentially. The surface of the separator coated with the first coating layer was enabled to be in contact with the positive electrode plate. The surface of the separator coated with the second coating layer was enabled to be in contact with the negative electrode plate. Winding was performed to obtain an electrode assembly. The electrode assembly was contained in an aluminum-plastic film packaging bag. Moisture was removed at 80°C. The prepared electrolyte liquid was injected. Vacuum encapsulation, standing, formation, shaping and other processes were performed to obtain a lithium-ion battery.

**Example 7, Example 8, and Example 9:** except the step of adjusting the coating surface density of the first coating layer as illustrated in Table 2-2 in <preparation of separator>, other steps were the same as those in Example 6.

**Example 10, Example 11, and Example 12:** except the step of preparing the first polymer by adopting the similar method for preparing the first polymer in (1-1) in Example 1 and the step of adjusting the Dv50 of the first polymer as shown in Table 2-2 in <preparation of first polymer>, other steps were the same as those in Example 7.

**Example 13, Example 14, Example 15, and Example 16:** except the step of preparing the first polymer by adopting the similar method for preparing the first polymer in (1-1) in Example 1 and the step of adjusting the softening point of the first polymer as shown in Table 2-2 in <preparation of first polymer>, other steps were the same as those in Example 7.

**Example 17, Example 18, Example 19, Example 20, and Example 21:** except the step of adjusting the component and the content of the first auxiliary adhesive as shown in Table 2-1 in <preparation of first coating layer>, other steps were the same as those in Example 7.

**Example 22, Example 23, Example 24, Example 25, Example 26, and Example 27**: except the step of preparing the first polymer by adopting the similar method for preparing the first polymer in (1-1) in Example 1 and the step of adjusting the component and content of the first polymer as shown in Table 2-1, other steps were the same as those in Example 7.

**Example 28, Example 29, Example 30, Example 31, Example 32, and Example 33**: except the step of adjusting the component and Dv50 of the inorganic particles as shown in Table 2-2 in <preparation of heat-resistant layer>, other steps were the same as those in Example 7.

**Example 34, Example 35:** except the step of adjusting the component and content of the second polymer and the second auxiliary adhesive as shown in Table 2-1 in <preparation of second coating layer, other steps were the same as those in Example 7.

**Example 36, Example 37, Example 38, Example 39, and Example 40:** except the step of adjusting the Dv50 of the second polymer as shown in Table 2-2 in <preparation of second coating layer>, other steps were the same as those in Example 7.

**Example 41, Example 42, and Example 43:** except the step of adjusting the coating surface density of the second coating layer as shown in Table 2-2 in <preparation of second coating layer>, other steps were the same as those in Example 7.

**Example 44:** except that no second coating layer was provided on the surface of the separator in <preparation of first coating layer>, other steps were the same as those in Example 7.

**Example 45:** except that no heat-resistant layer was provided between the first coating layer and the separator substrate in <preparation of first coating layer>, other steps were the same as those in Example 7.

### Example 46

Except the step of adjusting down the solid content of slurry A in <preparation of separator> to enable the number of particles with a maximum length of 10µm to 30µm in the first polymer in any area of 250µm*200µm on a surface of the first coating layer to be 10 as shown in Table 2-2, other steps were the same as those in Example 7.

### Example 47

Except the step of adjusting up the solid content of slurry A in <preparation of separator> to enable the number of particles with a maximum length of 10µm to 30µm in the first polymer in any area of 250µm*200µm on a surface of the first coating layer to be 30 as shown in Table 2-2, other steps were the same as those in Example 7.

### Comparative Example 1

Except the step of preparing the first polymer by adopting the similar method for preparing the first polymer in (1-1) in Example 1 in <preparation of separator>, in which the first polymer was a copolymer formed through polymerization of 80% of styrene, 10% of isobutyl acrylate and 10% of acrylonitrile by mass, the first auxiliary adhesive was a mixture formed by 5.5% of carboxymethyl cellulose sodium and 94.5% of dimethylsiloxane by mass and the mass ratio of the first polymer to the second polymer was 91:9, and the step of enabling the number of particles with a maximum length of 10µm to 30µm in the first polymer in any area of 250µm*200µm on a surface of the first coating layer to be 0, other steps were the same as those in Example 1.

### Comparative Example 2

Except the step of adjusting up the solid content of slurry A in <preparation of separator> to enable the number of particles with a maximum length of 10µm to 30µm in the first polymer in any area of 250µm*200µm on a surface of the first coating layer to be 34, other steps were the same as those in Example 1.

### Comparative Example 3

Except the step of adjusting down the solid content of slurry A in <preparation of separator> to enable the number of particles with a maximum length of 10µm to 30µm in the first polymer in any area of 250µm*200µm on a surface of the first coating layer to be 6, other steps were the same as those in Example 1.

### Comparative Example 4

Except the step of preparing the first polymer by adopting the similar method for preparing the first polymer in (1-1) in Example 1 in <preparation of separator>, in which the first polymer was a copolymer formed through polymerization of 80% of styrene, 10% of isobutyl acrylate and 10% of acrylonitrile by mass, the first auxiliary adhesive was a mixture formed by 5.5% of carboxymethyl cellulose sodium and 94.5% of dimethylsiloxane by mass and the mass ratio of the first polymer to the second polymer was 91:9, and the step of enabling the number of particles with a maximum length of 10µm to 30µm in the first polymer in any area of 250µm*200µm on a surface of the first coating layer to be 0 as shown in Table 2-2, other steps were the same as those in Example 7.

### Comparative Example 5

Except the step of adjusting up the solid content of slurry A in <preparation of separator> to enable the number of particles with a maximum length of 10µm to 30µm in the first polymer in any area of 250µm*200µm on a surface of the first coating layer to be 34 as shown in Table 2-2, other steps were the same as those in Example 7.

### Comparative Example 6

Except the step of adjusting up the solid content of slurry A in <preparation of separator> to enable the number of particles with a maximum length of 10µm to 30µm in the first polymer in any area of 250µm*200µm on a surface of the first coating layer to be 6 as shown in Table 2-2, other steps were the same as those in Example 7.

The preparation parameters and test results of each example and comparative example were as shown in Table 1, Table 2-1, and Table 2-2.

**Table 1**

| | Number of particles | 2C discharge rate (25°C, %) | 0.2C discharge rate (-20°C, %) | Capacity retention rate after500 low-temperature cycles (12°C, %) |
|---|---|---|---|---|
| Example 1 | 10 | 83.2 | 40.3 | 85.3 |
| Example 2 | 15 | 84.3 | 42.4 | 88.3 |
| Example 3 | 20 | 85.5 | 43.2 | 89.6 |
| Example 4 | 26 | 86.6 | 44.1 | 91.1 |
| Example 5 | 30 | 86.4 | 44.2 | 91.3 |
| Comparative Example 1 | 0 | 66.3 | 34.6 | 77.7 |
| Comparative Example 2 | 34 | 72.4 | 37.2 | 79.5 |
| Comparative Example 3 | 6 | 73.1 | 35.8 | 78.2 |

**Table 2-1**

| | Component and content of first polymer | Component and content of first auxiliary adhesive | Component and content of second polymer | Component and content of second auxiliary adhesive |
|---|---|---|---|---|
| Example 6 to Example 16 | Polyvinylidene fluoride, 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 17 | Polyvinylidene fluoride, 95% | (Copolymer formed by 80% of styrene, 10% of isobutyl acrylate and 10% of acrylonitrile), 5% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 18 | Polyvinylidene fluoride, 85% | (Copolymer formed by 80% of styrene, 10% of isobutyl acrylate and 10% of acrylonitrile), 15% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 19 | Polyvinylidene fluoride, 90% | (Copolymer formed by 80% of methylstyrene, 10% of butyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 20 | Polyvinylidene fluoride, 90% | (Copolymer formed by 80% of styrene, 10% of ethyl methacrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 21 | Polyvinylidene fluoride, 90% | (80% of styrene, 10% of ethyl methacrylate and 10% of butadiene), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 22 | Polyvinylidene fluoride, 85% | (Copolymer formed by 80% of styrene, 10% of isobutyl acrylate and 10% of acrylonitrile), 15% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 23 | Polyvinylidene fluoride, 95% | (Copolymer formed by 80% of styrene, 10% of isobutyl acrylate and 10% of acrylonitrile), 5% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 24 | (95% of polyvinylidene fluoride, 5% of hexafluoropropylene), 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 25 | (85% of styrene, 10% of butadiene and 5% of acrylic acid), 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 26 | (75% of styrene and 25% of acrylate), 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 27 | (50% of acrylic acid, 25% of acrylonitrile and 25% of styrene), 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 28 to Example 33 | Polyvinylidene fluoride, 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Example 34 | Polyvinylidene fluoride, 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 88% | (5.5% of carboxymethyl cellulose sodium, 94.5% of dimethylsiloxane), 12% |
| Example 35 | Polyvinylidene fluoride, 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 92.5% | (5.5% of carboxymethyl cellulose sodium, 94.5% of dimethylsiloxane), 7.5% |
| Example 36 to Example 47 | Polyvinylidene fluoride, 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Comparative Example 4 | (Copolymer formed by 80% of styrene, 10% of isobutyl acrylate and 10% of acrylonitrile), 91% | (5.5% of carboxymethyl cellulose sodium, 94.5% of dimethylsiloxane), 9% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Comparative Example 5 | Polyvinylidene fluoride, 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |
| Comparative Example 6 | Polyvinylidene fluoride, 90% | (Copolymer formed by 80% of styrene, 10% of isobutyl acrylate and 10% of acrylonitrile), 10% | (Copolymer formed by 80% of styrene, 10% of isobutyl acrylate and 10% of acrylonitrile), 91% | (5.5% of carboxymethyl cellulose sodium, 94.5% of dimethylsiloxane), 9% |

**Table 2-2**

| | | Nu mbe r of parti cles | Soften ing point of first polym er (°C) | Dv50 of first polym er (µm | Coatin g surfac es densit y W1 of first coatin g layer (g/m²) | Compone nt of inorganic particles in heat-resistant layer | Dv5 0 of inor gani c parti cles (µm ) | Dv50 of secon d polym er (µm) | Coatin g surfac es densit y of secon d coatin g layer( g/m²) | Perme ability value P of separa tor (sec/1 00mL) | Porosi ty K (%) | P/W1 | K/W1 | Adhe sion streng th of secon d coatin g layer in case of positive electr ode (N/m) | Adhe sion streng th of first coatin g layer in case of negati ve electr ode (N/m) | Hard ness of batter y (N/1 mm) | 2C discha rge rate (25°C, %) | 0.2C discharg e rate (-20°C,%) | Capacit y retentio n rate (12°C, %) |
|---|---|---|---|---|---|---|---|---|---|---|---|---|---|---|---|---|---|---|---|
| Example 6 | | 25 | 125 | 12 | 0.4 | Boehmite | 2 | 0.7 | 0.2 | 500 | 46.3 | 1250 | 1.16 | 12.1 | 5.5 | 45 | 88.6 | 47.5 | 93.3 |
| Example 7 | | 25 | 125 | 12 | 1 | Boehmite | 2 | 0.7 | 0.2 | 3200 | 47.0 | 3200.0 | 0.47 | 12.1 | 12.4 | 58 | 86.3 | 44.1 | 91.2 |
| Example 8 | | 25 | 125 | 12 | 1.5 | Boehmite | 2 | 0.7 | 0.2 | 6880 | 47.4 | 4586.7 | 0.32 | 12.1 | 13.3 | 65 | 85.8 | 44.0 | 91.0 |
| Example 9 | | 25 | 125 | 12 | 2 | Boehmite | 2 | 0.7 | 0.2 | 9020 | 48.0 | 4510.0 | 0.24 | 12.1 | 14.7 | 65 | 83.6 | 42.5 | 90.4 |
| Example 10 | | 25 | 125 | 3 | 1 | Boehmite | 2 | 0.7 | 0.2 | 6200 | 30.0 | 6200.0 | 0.30 | 11.9 | 13.4 | 61 | 85.1 | 43.0 | 90.5 |
| Example 11 | | 25 | 125 | 7 | 1 | Boehmite | 2 | 0.7 | 0.2 | 5440 | 38.0 | 5440.0 | 0.38 | 11.9 | 13.2 | 61 | 85.2 | 43.3 | 90.7 |
| Example | | 25 | 125 | 16 | 1 | Boehmite | 2 | 0.7 | 0.2 | 1240 | 64.5 | 1240.0 | 0.65 | 11.9 | 11.3 | 59 | 86.7 | 44.4 | 91.5 |
| 12 | | | | | | | | | | | | | | | | | | | |
| Example 13 | | 25 | 90 | 12 | 1 | Boehmite | 2 | 0.7 | 0.2 | 6500 | 46.2 | 6500.0 | 0.46 | 12.0 | 14.0 | 64 | 78.5 | 39.0 | 85.4 |
| Example 14 | | 25 | 110 | 12 | 1 | Boehmite | 2 | 0.7 | 0.2 | 5440 | 46.8 | 5440.0 | 0.47 | 12.0 | 13.4 | 61 | 81.8 | 39.7 | 86.0 |
| Example 15 | | 25 | 140 | 12 | 1 | Boehmite | 2 | 0.7 | 0.2 | 3110 | 47.2 | 3110.0 | 0.47 | 12.0 | 10.2 | 54 | 86.7 | 46.0 | 91.5 |
| Example 16 | | 25 | 150 | 12 | 1 | Boehmite | 2 | 0.7 | 0.2 | 1980 | 47.0 | 1980.0 | 0.47 | 12.0 | 8.7 | 52 | 88.5 | 46.7 | 92.6 |
| Example 17 | | 25 | 125 | 12 | 1 | Boehmite | 2 | 0.7 | 0.2 | 3010 | 46.0 | 3010.0 | 0.46 | 12.1 | 11.6 | 59 | 85.6 | 44.2 | 91.6 |
| Example 18 | | 25 | 125 | 12 | 1 | Boehmite | 2 | 0.7 | 0.2 | 4650 | 46.7 | 4650.0 | 0.47 | 12.1 | 12.8 | 59 | 85.4 | 43.5 | 90.3 |
| Example 19 | | 25 | 125 | 12 | 1 | Boehmite | 2 | 0.7 | 0.2 | 3300 | 46.2 | 3300.0 | 0.46 | 12.1 | 12.0 | 58 | 86.4 | 43.9 | 90.6 |
| Example 20 | | 25 | 125 | 12 | 1 | Boehmite | 2 | 0.7 | 0.2 | 3540 | 47.4 | 3540.0 | 0.47 | 12.1 | 11.5 | 58 | 86.2 | 44.0 | 90.6 |
| Example 21 | | 25 | 125 | 12 | 1 | Boehmite | 2 | 0.7 | 0.2 | 2710 | 47.2 | 2710.0 | 0.47 | 11.9 | 11.5 | 58 | 86.5 | 44.1 | 91.5 |
| Example 22 | | 25 | 125 | 12 | 1 | Boehmite | 2 | 0.7 | 0.2 | 3400 | 42.0 | 3400.0 | 0.42 | 11.8 | 12.6 | 59 | 85.9 | 43.5 | 90.2 |
| Example 23 | | 25 | 125 | 12 | 1 | Boehmite | 2 | 0.7 | 0.2 | 3120 | 46.5 | 3120.0 | 0.47 | 12.0 | 11.5 | 57 | 86.8 | 43.7 | 89.6 |
| Example 24 | | 25 | 125 | 12 | 1 | Boehmite | 2 | 0.7 | 0.2 | 2920 | 47.0 | 2920.0 | 0.47 | 12.0 | 12.2 | 59 | 86.2 | 43.8 | 90.5 |
| Example 25 | | 25 | 125 | 12 | 1 | Boehmite | 2 | 0.7 | 0.2 | 3950 | 47.0 | 3950.0 | 0.47 | 12.0 | 12.3 | 59 | 86.0 | 44.5 | 89.8 |
| Example 26 | | 25 | 125 | 12 | 1 | Boehmite | 2 | 0.7 | 0.2 | 4320 | 47.0 | 4320.0 | 0.47 | 12.1 | 10.4 | 56 | 86.6 | 43.3 | 89.4 |
| Example 27 | | 25 | 125 | 12 | 1 | Boehmite | 2 | 0.7 | 0.2 | 4700 | 47.0 | 4700.0 | 0.47 | 12.1 | 10.9 | 54 | 86.9 | 42.3 | 88.6 |
| Example 28 | | 25 | 125 | 12 | 1 | Boehmite | 0.5 | 0.7 | 0.2 | 4300 | 41.0 | 4300.0 | 0.41 | 12.2 | 12.2 | 58 | 85.4 | 42.2 | 90.1 |
| Example | | 25 | 125 | 12 | 1 | Boehmite | 3 | 0.7 | 0.2 | 2020 | 53.0 | 2020.0 | 0.53 | 12.1 | 12.1 | 57 | 87.0 | 45.3 | 91.3 |
| 29 | | | | | | | | | | | | | | | | | | | |
| Example 30 | | 25 | 125 | 12 | 1 | Aluminu m oxide | 5 | 0.7 | 0.2 | 1260 | 58.0 | 1260.0 | 0.58 | 12.1 | 12.3 | 59 | 87.2 | 46.6 | 91.6 |
| Example 31 | | 25 | 125 | 12 | 1 | Boehmite | 10 | 0.7 | 0.2 | 950 | 62.0 | 950.0 | 0.62 | 11.9 | 12.4 | 59 | 87.4 | 47.0 | 92.2 |
| Example 32 | | 25 | 125 | 12 | 1 | Boehmite | 20 | 0.7 | 0.2 | 750 | 63.2 | 750.0 | 0.63 | 11.9 | 12.4 | 59 | 87.5 | 47.0 | 92.2 |
| Example 33 | | 25 | 125 | 12 | 1 | Boehmite | 35 | 0.7 | 0.2 | 500 | 65.0 | 500.0 | 0.65 | 12.1 | 12.4 | 58 | 87.5 | 47.2 | 92.5 |
| Example 34 | | 25 | 125 | 12 | 1 | Boehmite | 2 | 0.7 | 0.2 | 3180 | 47.0 | 3180.0 | 0.47 | 11.5 | 12.2 | 58 | 85.6 | 43.7 | 90.9 |
| Example 35 | | 25 | 125 | 12 | 1 | Boehmite | 2 | 0.7 | 0.2 | 3270 | 47.0 | 3270.0 | 0.47 | 12.4 | 12.3 | 59 | 85.7 | 43.8 | 91.0 |
| Example 36 | | 25 | 125 | 12 | 1 | Boehmite | 2 | 0.2 | 0.2 | 2930 | 46.4 | 2930.0 | 0.46 | 14.0 | 12.5 | 61 | 82.4 | 40.8 | 88.5 |
| Example 37 | | 25 | 125 | 12 | 1 | Boehmite | 2 | 1.5 | 0.2 | 3110 | 48.0 | 3110.0 | 0.48 | 11.0 | 12.1 | 57 | 86.5 | 45.8 | 91.5 |
| Example 38 | | 25 | 125 | 12 | 1 | Boehmite | 2 | 3 | 0.2 | 3020 | 48.8 | 3020.0 | 0.49 | 9.0 | 12.2 | 53 | 87.0 | 46.3 | 92.0 |
| Example 39 | | 25 | 125 | 12 | 1 | Boehmite | 2 | 5 | 0.2 | 2860 | 50.3 | 2860.0 | 0.50 | 6.0 | 12.2 | 46 | 87.4 | 46.5 | 92.3 |
| Example 40 | | 25 | 125 | 12 | 1 | Boehmite | 2 | 8 | 0.2 | 2310 | 54.0 | 2310.0 | 0.54 | 4.8 | 12.2 | 43 | 88.6 | 47.2 | 92.8 |
| Example 41 | | 25 | 125 | 12 | 1 | Boehmite | 2 | 0.7 | 0.1 | 1690 | 46.5 | 1690.0 | 0.47 | 7.7 | 12.4 | 48 | 87.6 | 46.8 | 92.5 |
| Example 42 | | 25 | 125 | 12 | 1 | Boehmite | 2 | 0.7 | 0.6 | 4440 | 46.0 | 4440.0 | 0.46 | 14.3 | 12.4 | 60 | 82.7 | 40.5 | 88.8 |
| Example 43 | | 25 | 125 | 12 | 1 | Boehmite | 2 | 0.7 | 1 | 5070 | 46.0 | 5070.0 | 0.46 | 16.4 | 12.4 | 72 | 75.4 | 38.6 | 85.6 |
| Example 44 | | 25 | 125 | 12 | 1 | Boehmite | 2 | - | - | 3000 | 47.0 | 3000 | 0.47 | 12.1 | - | 56 | 86.0 | 43.7 | 91.0 |
| Example 45 | | 25 | 125 | 12 | 1 | - | - | 0.7 | 0.2 | 3100 | 47.0 | 3100.0 | 0.47 | 12.1 | 12.4 | 54 | 85.8 | 43.5 | 90.6 |
| Example | | 10 | 125 | 12 | 1 | Boehmite | 2 | 0.7 | 0.2 | 2000 | 47.0 | 2000.0 | 0.47 | 11.1 | 12.4 | 58 | 82.7 | 42.0 | 87.1 |
| 46 | | | | | | | | | | | | | | | | | | | |
| Example 47 | | 30 | 125 | 12 | 1 | Boehmite | 2 | 0.7 | 0.2 | 1500 | 47.0 | 1500.0 | 0.47 | 10.8 | 12.4 | 55 | 83.3 | 41.1 | 88.2 |
| Comparat ive Example 4 | | 0 | 48.5 | 0.7 | 0.2 | Boehmite | 2 | 0.7 | 0.2 | 10200 | 38.0 | 51000.0 | 1.90 | 12.1 | 13.5 | 64 | 67.3 | 35.4 | 78.8 |
| Comparat ive Example 5 | | 34 | 125 | 12 | 1 | Boehmite | 2 | 0.7 | 0.2 | 10500 | 69.0 | 10500.0 | 0.69 | 12.1 | 5.5 | 44 | 73.6 | 38.4 | 80.2 |
| Comparat ive Example 6 | | 6 | 125 | 12 | 1 | Boehmite | 2 | 0.7 | 0.2 | 470 | 41.0 | 470 | 0.41 | 12.1 | 14.3 | 65 | 74.2 | 36.7 | 79.7 |

From Examples 1 to 5 and Comparative Examples 1 to 3, as well as Examples 6 to 47 and Comparative Examples 4 to 6, it can be seen that, by controlling the number of particles with a maximum length of 10µm to 30µm in the first polymer in the first coating layer to be within the range in this application, the room-temperature rate performance, low-temperature rate performance and low-temperature cycle performance of the lithium-ion battery can be significantly improved, and the influence on the hardness of the lithium-ion battery is small. In a case that the first coating layer does not contain the first polymer in this application (the number of particles with a maximum length of 10µm to 30µm in the polymer is 0, for example, in Comparative Example 1 and Comparative Example 4), the room-temperature rate performance, low-temperature rate performance and low-temperature cycle performance of the lithium-ion battery are poor. In a case that the number of particles with a maximum length of 10µm to 30µm in the first polymer is too large or too small (for example, in Comparative Examples 2, 3, 5 and 6), it is difficult to improve the room-temperature rate performance, low-temperature rate performance, and low-temperature cycle performance of the lithium-ion battery.

The coating surface density of the first coating layer usually also influences the performance of the lithium-ion battery. From Examples 6 to 9, it can be seen that as long as the coating surface density of the first coating layer is within the range in this application, a lithium-ion battery with excellent battery hardness, room-temperature rate performance, low-temperature rate performance and low-temperature cycle performance can be obtained.

The Dv50 of the first polymer usually also influences the performance of the lithium-ion battery. From Examples 10 to 12, it can be seen that as long as the Dv50 of the first polymer is within the range in this application, a lithium-ion battery with excellent battery hardness, room-temperature rate performance, low-temperature rate performance and low-temperature cycle performance can be obtained.

The softening point of the first polymer usually also influences the performance of the lithium-ion battery. From Examples 13 to 16, it can be seen that as long as the softening point of the first polymer is within the range in this application, a lithium-ion battery with excellent battery hardness, room-temperature rate performance, low-temperature rate performance and low-temperature cycle performance can be obtained.

The component and content of the first auxiliary adhesive usually also influence the performance of the lithium-ion battery. From Examples 17 to 21, it can be seen that as long as the component and content of the first auxiliary adhesive are within the range in this application, a lithium-ion battery with excellent battery hardness, room-temperature rate performance, low-temperature rate performance and low-temperature cycle performance can be obtained.

The component and content of the first polymer usually also influence the performance of the lithium-ion battery. From Examples 22 to 27, it can be seen that as long as the component and content of the first polymer are within the range in this application, a lithium-ion battery with excellent battery hardness, room-temperature rate performance, low-temperature rate performance and low-temperature cycle performance can be obtained.

The component and Dv50 of the inorganic particles in the heat-resistant layer usually also influence the performance of the lithium-ion battery. From Examples 28 to 33, it can be seen that as long as the component and Dv50 of the inorganic particles in the heat-resistant layer are within the range in this application, a lithium-ion battery with excellent battery hardness, room-temperature rate performance, low-temperature rate performance and low-temperature cycle performance can be obtained.

The component and content of the second polymer, the component and content of the second auxiliary adhesive, the Dv50 of the second polymer and the coating surface density of the second coating layer usually influence the performance of the lithium-ion battery. From Examples 34 to 43, it can be seen that as long as the component and content of the second polymer, the component and content of the second auxiliary adhesive, the Dv50 of the second polymer and the coating surface density of the second coating layer are within the range in this application, a lithium-ion battery with excellent battery hardness, room-temperature rate performance, low-temperature rate performance and low-temperature cycle performance can be obtained.

From Example 7 and Examples 44 and 45, it can be seen that providing a heat-resistant layer and a second coating layer in the separator can further improve the battery hardness, room-temperature rate performance, low-temperature rate performance and low-temperature cycle performance of the lithium-ion battery.

The above are only preferred examples of this application and are not intended to limit this application. Any modifications, equivalent replacements, improvements and the like made within the spirit and principle of this application shall be included within the scope of protection of this application.

## Claims

1. A separator, comprising a substrate and a first coating layer provided on at least one surface of the substrate;
the first coating layer comprising a first polymer, the number of particles with a maximum length of 10µm to 30µm in the first polymer in any area of 250µm*200µm on a surface of the first coating layer being 10 to 30.

2. The separator according to claim 1, wherein an air permeability value P of the separator is 500sec/100mL to 10000sec/100mL.

3. The separator according to claim 1, wherein a coating surface density W1 of the first coating layer of the separator is 0.4g/m² to 2g/m².

4. The separator according to claim 1, wherein a porosity K of the separator is 30% to 65%.

5. The separator according to claim 1, wherein the separator further comprises a heat-resistant layer, the heat-resistant layer is provided between the substrate and the first coating layer, the heat-resistant layer comprises inorganic particles, and the particle size Dv50 of the inorganic particles is 0.5µm to 35µm.

6. The separator according to claim 5, wherein the inorganic particles comprise at least one of boehmite, magnesium hydroxide, aluminum oxide, titanium dioxide, silicon dioxide, zirconium dioxide, tin dioxide, magnesium oxide, zinc oxide, barium sulfate, boron nitride and aluminum nitride.

7. The separator according to claim 1, wherein an air permeability value P of the separator and a surface density W1 of the first coating layer satisfy the following relationship: P/W1=500 to 6500.

8. The separator according to claim 1, wherein a porosity K of the separator and a surface density W1 of the first coating layer satisfy the following relationship: K/W1=0.15 to 1.4.

9. The separator according to claim 1, wherein the first coating layer further comprises a first auxiliary adhesive, the first auxiliary adhesive comprises at least one selected from the group consisting of homopolymers or copolymers of ethyl acrylate, butyl acrylate, ethyl methacrylate, styrene, chlorostyrene, fluorostyrene, methyl styrene, acrylic acid, methyl acrylic acid, maleic acid, acrylonitrile and butadiene; and a mass ratio of the first polymer to the first auxiliary adhesive is 2.5 to 18.

10. The separator according to claim 1, wherein the separator further comprises a second coating layer, the first coating layer and the second coating layer are respectively provided on two sides of the separator, the second coating layer comprises a second polymer and a second auxiliary adhesive, and the mass ratio of the second polymer to the second auxiliary adhesive is 5 to 20.

11. The separator according to claim 9, wherein an adhesion strength of the first coating layer in case of a positive electrode is set to 4N/m to 20N/m.

12. The separator according to claim 10, wherein the adhesion strength of the first coating layer in case of a negative electrode is set to 4N/m to 20N/m.

13. The separator according to claim 9, wherein based on the total mass of the first coating layer, a mass percentage content of the first polymer is 85% to 95%, and a mass percentage content of the first auxiliary adhesive is 5% to 15%.

14. The separator according to claim 1, wherein a softening point of the first polymer is 90°C to 150°C, and a Dv50 of the first polymer is 3µm to 16µm.

15. The separator according to claim 1, wherein a coating surface density W2 of the second coating layer of the separator is 0.1g/m² to 1g/m².

16. The separator according to claim 10, wherein based on the total mass of the second coating layer, a mass percentage content of the second polymer is 88% to 92.5%, and a mass percentage content of the second auxiliary adhesive is 7.5% to 12%.

17. The separator according to claim 1, wherein the first polymer comprises at least one selected from the group consisting of homopolymers or copolymers of vinylidene fluoride, vinylidene fluoride, hexafluoropropylene, ethylene, propylene, vinyl chloride, chloropropene, acrylic acid, acrylate, styrene, butadiene and acrylonitrile.

18. The separator according to claim 10, wherein the second polymer comprises at least one selected from the group consisting of homopolymers or copolymers of ethyl acrylate, butyl acrylate, ethyl methacrylate, styrene, chlorostyrene, fluorostyrene, methyl styrene, acrylic acid, methyl acrylic acid, maleic acid, acrylonitrile and butadiene; the Dv50 of the second polymer is 0.2µm to 8µm, and the second auxiliary adhesive comprises at least one of carboxymethyl cellulose sodium or dimethylsiloxane.

19. The separator according to claim 1, wherein the separator satisfies at least one of the following characteristics:
a) the number of particles with a maximum length of 10µm to 30µm in the first polymer in any area of 250µm*200µm on a surface of the first coating layer is 20 to 30;
b) a coating surface density W1 of the first coating layer of the separator is 0.4g/m² to 1g/m²;
c) an air permeability value P of the separator is 1000sec/100mL to 5000sec/100mL; or
d) the separator further comprises a heat-resistant layer, the heat-resistant layer is provided between the substrate and the first coating layer, the heat-resistant layer comprises inorganic particles, and a particle size Dv50 of the inorganic particles is 5µm to 35µm.

20. An electrochemical apparatus, comprising the separator according to any one of claims 1-19.

21. An electronic device, comprising the electrochemical apparatus according to claim 20.
